# EUROPEAN PATENT APPLICATION

(11) **EP 2 249 090 A2**
(43) Date of publication of application: **10.11.2010**
(21) Application number: 10004547.5
(22) Date of filing: 30.04.2010
(51) Int. Cl.: F24D 11/02

(54) **Thermal system**

(30) Priority: 06.05.2009 IT UD20090087
(71) Applicant: COSTRUZIONI SOLARI S.R.L., 73020 Cavallino LE (IT)
(72) Inventor: Bee, Antonio, 73020 Cavallino (LE) (IT); Rizzo, Luigi, 73020 Caprarica di Lecce (LE) (IT)

(57) **Abstract**

A compact heat plant (10) for the production of domestic hot water and at least for the environmental heating of a house or another building, includes a solar boiler (12) which is associated both to solar panel media (14) for domestic hot water and secondary heat carrier fluid heating and to thermal conditioning media (15) able at least to use the heat carrier fluid heated from the solar boiler (12) to heat a house or another building, thermal energy generation media (16) able to integrate the production of the solar boiler (12). Solar panels media (12) and generation media (16) are able to provide simultaneously, according to defined or definable ratios, thermal energy to the solar boller, so that the thermal energy demand from a house or another building is fully met.

## Description

### Field of application

The present discovery refers to a heat system for the conversion of solar energy into thermal energy and the production of domestic hot water and/or indoor heating and conditioning. In particular the heat system according to the present discovery can be connected to other heating and/or conditioning sources and can be installed outdoor or indoor, in the so called technical room or any other suitable premises in a house or building.

### State of the technique

Solar systems for the production of thermal energy to warm up domestic hot water or a thermal carrier fluid in a heating plant are well known. Such known systems comprise several solar panels, arranged in a configuration exposed to solar radiation, like on the building roof, and connected to a line distributing a heat carrier fluid which is linked, directly or indirectly, either to the distribution of domestic hot water or to the distribution of the heating system.

A typical drawback of such known systems is that, in particular during winter months or generally during days with few or null solar radiation, the solar boiler is unable to individually satisfy an average family's thermal energy needs. Moreover, known systems during summer months are unable to provide environmental cooling/conditioning.

Another drawback of such systems is that they require long installation time, in particular when it is necessary to link the distribution circuit of different and already existing systems, such as solar, heating and conditioning.

Furthermore, because of their complexity, it is possible that errors occur during the installation of known systems.

A purpose of the present discovery is to realize a thermal plant which can satisfy the user's thermal energy needs over the whole year, which can shorten the installation times of the distributing circuits of the heating plant avoiding the possible errors in such phase.

In order to overcome the drawbacks of the known technique and to achieve these and others aims and advantages, the applicant has studied, experimented and realized the following discovery.

### Description of the discovery

The present discovery is expressed and characterized in the independent claims.

The related depending claims explain other characteristics of the present discovery, or variation to the idea of the main solution.

According to the before said purpose, a compact heat system according to the present discovery is employed to produce domestic hot water and at least for the environmental heating of a house or a building.

The plant according to the present discovery comprises:
- A solar boiler, connected both to solar panel media, for the production of domestic hot water and for the heating of a heat carrier fluid, generally water, and to thermal conditioning media able at least to employ the warmed heat carrier fluid from the solar boiler to warm up a house or another building.
- Thermal energy generation media, able to integrate the production of thermal energy from the solar boiler.

The aforesaid solar panel media and generation media are able to simultaneously supply, according to defined or definable ratio, thermal energy to the solar boiler, so that the house or building thermal energy demand is met.

This is profitable, especially during winter season, when the thermal energy generation media integrates the solar boiler for the production of domestic hot water and heating.

According to a variant, the heat generation media comprise a heat pump, using which is possible, in a first operating condition, to integrate the generation of thermal energy in the solar boiler and, in a second operating condition, to provide for the environmental conditioning in a house or building by cooling a secondary fluid which is employed in the conditioning media for the cooling.

The discovery, according to another simplified variant for the sole production of domestic hot water and environmental heating without cooling/conditioning, comprises, as thermal energy generators, a gas burner or a fireplace as heat sources.

According to an advantageous implementation of the discovery, the compact heat system comprises renewable electric energy generators which are able to directly or indirectly supply, or integrate, the electric feed for the operation of the thermal energy generators, so that the discovery is made independent from non renewable electric and thermal energy sources.

The system, simultaneously employing two renewable sources, thermal from the solar and electric from the photovoltaic, make the discovery advantageously autonomous from an energetic point of view.

According to a preferential configuration, the renewable electric energy generation media include photovoltaic panels.

It is clear that, alternatively or together with photovoltaic panels, other renewable energy sources, such as wind turbines or water turbines, can be used.

The present discovery satisfies all the needs connected to the realization of compact solar plant for the generation of domestic hot water and environmental conditioning.

The discovery automatically manages the energetic sources to which is connected together with the distribution system of domestic hot water and the environmental cooling/conditioning and heating circuit.

Advantageously, during the summer time, the discovery allows the heat pump to work in cooling mode, excluding the thermal energy integrating circuit from the solar boiler" while the boiler itself can, anyway, contemporary continue its function of domestic hot water generation. This is particularly advantageous with respect to a known type of heat pump, which during summer time can alternatively works as environmental cooling device or domestic hot water heating device, but never in both modes contemporary.

During winter months, instead, with the present discovery, the heat pump doesn't work as cooler but as heater, and can be used as integration to the boiler thermal energy.

According to a realization form, the heat system includes temperature sensing media able to supply signals which are indicative of the temperature inside the solar boiler and/or at the inlet/outlet of solar panels or thermal conditioning media.

The system advantageously includes control media which, depending also from the signals coming from aforesaid temperature sensing media, are able to control and command the operation of the solar panels together with the selective activation of the thermal energy generation media and of Thermal conditioning media.

According to a realization variant, the aforesaid thermal conditioning media include radiant heating, advantageously employable for environmental cooling too.

Alternatively, or together, thermal conditioning media include thermal convectors.

An advantageous variant of the present discovery provides a group for the automatic filling of the solar panels circuits with the heat carrier fluid.

The assembly of the hydraulic and electronic components related to the heat pump, solar panel circuit, feeding and distribution of domestic hot water, environmental conditioning and electronic units is carried out directly in the factory. This allows to perform, already during the assembly, all the necessary tests in order to ensure the full operation of the system. Therefore the installation is highly simplified: it is only necessary to connect the pipes for domestic water, conditioning circuit (radiant heating or thermal convector), solar circuit and heat pump to the respective sleeves on the outer of the solar boiler to have the full operating system.

A procedure according to the present discovery to produce domestic hot water and at least for environmental heating includes:
- A first step in which warming up domestic hot water and a heat carrier fluid by means of a solar boiler which is connected both to solar panels media and to thermal conditioning media able to employ the heat carrier fluid warmed from the solar boiler to warm up a house or another building;
- A second step in which the thermal energy generation media integrate the production of thermal energy from the solar boiler, by contemporary production of thermal energy from aforesaid solar panels media and generation media, according to defined or definable ratios, so that the thermal energy needs of a house or building are fully satisfied.

### Drawing description

These and other characteristics of the present discovery will clearly appear after the following description of a preferential realization form, given only for illustrative and not limitative purposes, with reference to the annexed drawings, in which:
- Fig. 1 is a schematic representation of a thermal plant according to the present discovery;
- Fig. 2 is a schematic representation of part of the plant in fig. 1.

### Description of a preferential realization form

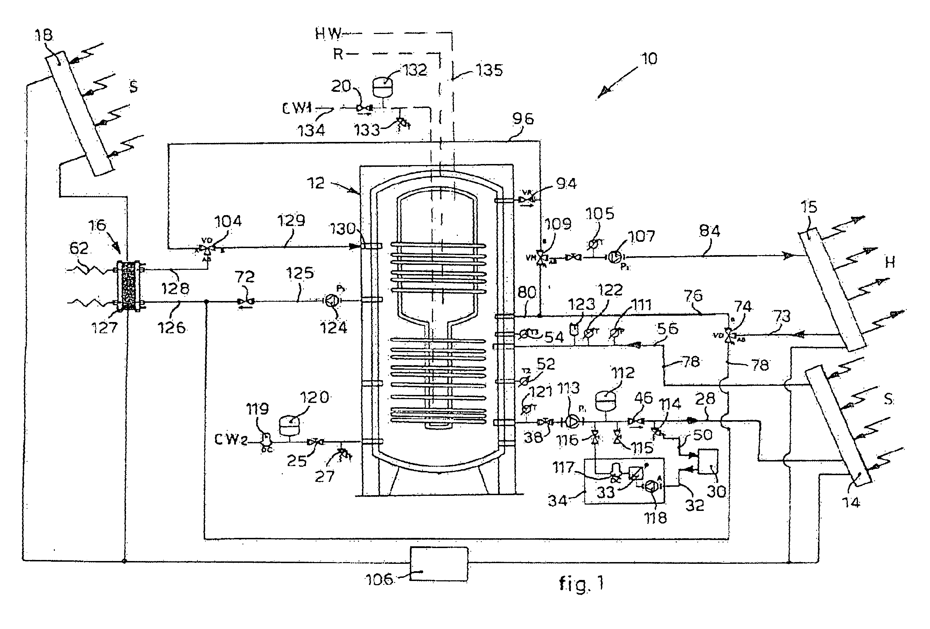

With reference to fig. 1, a thermal plant 10 for a house or other building according to the present discovery includes:
- A solar boiler 12 of the combined type, with the function of heat storage for heating and for domestic hot water.
- Solar panels 14, which employ the solar radiation (S arrows) to heat a heat carrier fluid, like a water-glycol mixture, by means of which the water in the solar boiler 12 is heated, both for domestic hot water generation and for the heating of a house or another building.
- Thermal conditioning media such as radiant heating 15, which, by means of the heated water corning from the solar boiler 12 and flowing in the associated distribution circuit, act, as depicted form arrows H, as heating system, advantageously of the underfloor type, or as cooling/conditioning system in the case that the flowing fluid is cooled.
- Thermal energy generators media, such as an heat pump 16, by means of which it is possible the integration of the thermal energy produced from the solar panels 14, typically to meet the thermal energy demand when the solar energy production is limited, such as during winter months, to heat the water in the solar boiler 12 for domestic hot water production or environmental heating or, during summer months, to cool down the secondary fluid for environmental conditioning by means of the radiant system 15.
- Renewable electric energy generation media such as photovoltaic panels 18, which employ the solar radiation (S arrows) as renewable energy source to produce electric energy, by means of which the electrical feed, necessary for the operation of the heat pump 16, is provided

The employed photovoltaic panels 18 have small size, i.e. 1 kWp.

Thanks to the photovoltaic panels 18 it is possible to be disengaged from the use of fossil fuels or electric energy taken from the public distribution.

The photovoltaic panels 18 can directly teed the heat pump 16, through batteries and accumulators. Or, the photovoltaic panels 18 can put the produced energy in the local electric energy dealer's grid, while this feed, when necessary, the heat pump 16. In any case the balance is favourable for the user.

The storage in the solar boiler 12, for domestic hot water and heating, is heated by means of the solar panels 14 and the heat pump 16.

The solar boiler 12, realized both for indoor and outdoor environments, is, in this case, a combined type, double layer enamelled with a double, fixed serpentine.

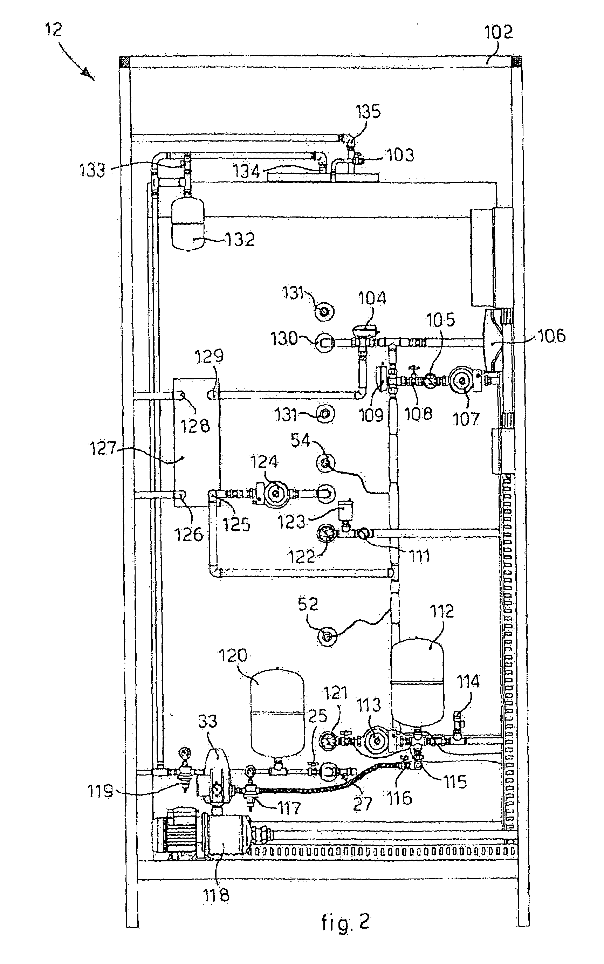

Such solar boiler 12, see also in fig. 2, holds and external careening 102, on which are realized the connections for the various fluids.

In particular the solar boiler 12 has a connection 134 for cold domestic water, depicted with CW1 in fig. 1, where a check valve 20, an expansion vessel 132 and a safetyvalve 133 can be found in series.

Moreover, the solar boiler 12 has a second inlet for cold water, depicted as CW2 in fig. 1, by which it is possible to operate the load of the solar boiler 12 (function of thermal fly wheel), which provides a load group 119, an expansion vessel 120, a stop valve 25 and a safety vale 27.

The solar boiler 12 includes, moreover, an outlet 135 for domestic hot water, depicted with HW in fig. 1. A recirculation for domestic hot water, depicted with R in fig. 1, is also provided.

The solar boiler 12 has, in the upper part, a manual discharge duct 103 (fig. 2).

The solar panels 14 provide a return line 28, to allow the flow of the hear carrier fluid, i.e. a water/glycol mixture, from the solar boiler 12. The return line 28 to the solar panels 14 provide, in series, a thermometer 121 to detect the outlet temperature from the solar boiler 12, a stop valve 38, a solar circulator 113 for the transmission of the heat carrier fluid from the solar boiler 12 to the solar panels 14, and expansion vessel 112, for the expansion of the heat carrier fluid in the determined limits, a check valve 46 and a safety valve 114, to discharge the heat carrier fluid when it exceeds these limits when the temperatures in the solar circuit and in the storage are too high.

When the heat carrier fluid is discharged from the safety valve 114, it is collected in a tank 30, inlet 50, and afterwards taken from the tank 30, outlet 32, and inserted back again in the solar circuit by means of an automatic filling group 34.

The reinsertion at the load tap 116 is automatically carried out by means of an autoclave 118 and an expansion chamber 33. Before reinsertion the heat carrier fluid flows through an automatic load group 117 which acts as pressure regulator, allowing to insert back the previously discharged fluid while maintaining the design pressure values. Moreover the solar circuit provides also a manual discharge duct 115.

Temperature sensors 52, 54, are provided, in order to determine the temperature values in different positions in the solar boiler 12. Housing 131 for the sensors 52, 54 are also provided (fig. 2).

It is also provided an outlet line 56 for the heat carrier fluid from the solar panels 14 to the solar boiler 12, in which one has, in series, a pressure gauge 111, a thermometer 122 to detect the outlet temperature to the solar circuit and a vent valve 123 to allow degassing before the heat carrier fluid enters the solar boiler 12.

The radiant system 15, for underfloor heating, are integrated with a control and management unit for underfloor environmental conditioning, which comprises variable speed circulators, motorized mixing valve, control electronics, temperature and humidity sensors.

In particular it is provided an inlet line 84 to the radiant panels 15, by means of which a part of the heated water produced by the solar boiler 12 is sent to the underfloor system for heating or, sending the secondary fluid, for cooling, according to the operating condition of the heat pump 16.

There is also an outlet 73 from the radiant panels 15 through which the exhaust heat carrier fluid flows, which provides a 3 way diverter motorized valve 74 (1 inlet, 2 outlets). Such diverter valve 74 provides two outlet lines upstream, from which one line 76 enters the boiler and another line 78 which is addressed to the heat pump 16 as explained In the following, for the flow of the secondary cooling fluid. The deviating valve 74 allows for the switching between cooling and heating circuits, as better explained in the following.

The first line 76 is split in two sub-lines, of which a first one 80 enters the solar boiler 12 and a second one 82 is connected to a 3 way (2 inlet, 1 outlet) motorized mixing valve 109.

The mixing valve 109 provides, other than the inlet from the line 82, also another inlet line 96, with a check valve 94 connected to the head of the solar boiler 12, for secondary cooling flow coming from the circuit of the heat pump 16 which will be better explained in the following.

The outlet of the mixing valve 109 provides a gate valve 108, a temperature sensor 105 to detect the temperature at the outlet of the thermal conditioning, heating or cooling, and a circulator 107 to feed the radiant panel 15 circuit, through the inlet 84.

During the summer time the mixing valve 109 is properly adjusted for the desired flow of the secondary cooling fluid to have environmental cooling, always by means of radiant panels 15, while, during winter months, the mixing valve 109 allows only the flow of the heat carrier fluid coming from the solar boiler 12 for environmental heating.

The heat pump 16 has, on one side, a circuit 62 for Freon, or another suitable gas, flow into a condenser/evaporator 127, with the purpose of heating water or to cool down a secondary fluid for environmental cooling.

The heat pump 16 circuit provides on the water or fluid side, an outlet line 128 which is connected to a motorized 3 way deviating valve 104 (1 inlet, 2 outlets), by means of which it is made the switching between the circuit which integrates thermal energy in the solar boiler 12 and the circuit for environmental cooling.

The two outlets from the deviating valve 104 are made from the line 96 which goes to the mixing valve 109 as already said, for the flow of the secondary cooling fluid, and from an outlet line 129 to put, via an integration inlet 130, hot integration water in the solar boiler 12, to aid the generation of the necessary thermal energy.

The heat pump 16 circuit, water side, provides moreover a pump 124 which sucks water from the solar boiler 12 and pump it, via an integration return line 125 and a check valve 72, to the evaporator/condenser 127, where it is heated.

Before the check valve 72, it is connected to the circuit the second line 78 coming from the deviating valve 74 and all goes into the evaporator/condenser 127, via a return line 126 of the heat pump.

In particular the second line 78 and the line 96 can be employed during summer months, when the heat pump 16 is used to cool down the secondary fluid for environmental cooling via the radiant panel 15.

In such case the deviating valves 74 and 104 are properly set, so that lines 125 and 129 of the integrating circuit are excluded and not employed, since normally during summer there is no need to integrate the thermal energy production in the solar boiler 12, and the secondary fluid cooled in the condenser/evaporator 127 can flow in the circuit connecting the radiant panels 15 through the lines 78 and 96.

The operation of the system 10 is controlled and commanded from an electronic unit 106 with an electric cabinet. The discovery is fully equipped with electric wiring and switches.

The unit 106 sends the commands for the activation of the solar panels 14 circuit, the heat pump 16, the radiant panels 15 for heating, according to the signals received from the various temperature sensors 52,54,105.

The unit 106 is able to switch the heat pump 16 from the integration of thermal energy to the solar boiler 12, typically during winter months, to environmental cooling/conditioning, in summer months, acting on the deviating valves 74 and 104 for their above said operation.

In particular, according to the signal received from the temperature sensors 52, 54, 105, the unit 106 activates the heat pump 16, to integrate the heat energy supply to the solar boiler 12, particularly during winter months or during days with low solar irradiation.

The heat pump 16, in this way, provide the thermal energy necessary to the integration of heating and domestic hot water production during the winter, and produces cooled water for environmental cooling/conditioning during the summer.

The employed heat pump 16 can have a power of 34000 Btu/hr.

The solar boiler 12 can have the following sizes:
- 600/150: heating storage 522 litres, domestic hot water 140 litres;
- 750/180: heating storage 598 litres, domestic hot water 175 litres;
- 1000/200: heating storage 665 litres, domestic hot water 190 litres;
- 1500/300: heating storage 1145 litres, domestic hot water 300 litres;

The plant 10 according to the present discovery represents, then, a system completely factory assembled and compact. l.e. the ensemble of solar boiler 12 600/150, heat pump 16, radiant panel 15 control station and automatic filling group 34 has the following dimensions: height 2265 mm, width 1100 mm and depth 1465 mm.

### Example

Thermal plant with a 600/150 boiler for a 120 m² apartment in B class (Epi: 40 kWh/m² per year), mean yearly consumption 6200 kWh. Such system can be coupled to 4 PANDA 2.6 collectors (net absorber surface 10 m²).

The plant assembled in such way can cover, with the solar panels, more than 60% of the necessity of a mean family for heating and domestic hot water. The heat pump integrates the system during winter months, when the solar circuit is not self-sufficient (it covers only the 40% of the need) and produces cooled water for environmental conditioning during summer.

Thus, normally the 60% of the thermal energy is provided from the solar circuit (3720 kWh/year with no expenses), while the 40% of the thermal need is integrated from the heat pump (2840 kWh/year with a modest electric consumption, about 160 Euros as of today).

If we add to this the energetic consumption for summer conditioning, equals to 6824 Btu for the 3 summer months, with an electricity cost of about 130 Euros as of today, it results that, with an overall expense of 290 Euros per year it is possible to fully satisfy the energetic needs for heating, conditioning and domestic hot water production for the apartment of the example.

The use of photovoltaic panels 18 meets the electric consumption of the heat pump, completely removing the energetic dependence of the apartment.

It is clear that to the system so far described can be applied modifications or other parts, without going beyond the purpose of this discovery.

It is also clear that, although the present discovery has been described with reference to some specific examples, an expert of the field can surely realize many equivalent forms of thermal plants, having the characteristics expressed in the claims and then falling within the protection they define.

## Claims

1. Compact thermal plant for the production of domestic hot water and at least for the environmental heating of a house or another building, **characterized in that** it includes:
a) A solar boiler (12) which is associated both to solar panels media (14) for the heating of domestic hot water and of a secondary heat carrier fluid for heating and to thermal conditioning media (15) able at least to employ the heat carrier fluid heated from the solar boiler (12) to warm up a house or another building;
b) Thermal energy generation media (16) able to integrate the thermal energy production from the solar boiler (12);
such solar panels media (14) and generation media (16) are able to contemporary furnish, according to defined or definable ratios, thermal energy to the solar boiler (12), so that they fully meet the energetic demand of a house or another building.

2. Plant as in claim 1, **characterized in that** the thermal energy generation media include an heat pump (16), by means of which, in a first operative condition, it is possible to integrate the thermal energy generation of the solar boiler (12) and, in a second operative condition, provide to environmental conditioning in a house or another building too, by cooling down a secondary fluid which is used from the conditioning media (15) for cool ing/conditioning.

3. Plant as in claims 1 or 2, **characterized in that** it includes renewable electric energy generation media (18) which are able to provide, directly or indirectly, the electric feed for the operation of the thermal energy generation media (16).

4. Plant as in the claim 3, **characterized in that** the renewable electric energy generation media include photovoltaic panels (18).

5. Plant as in any of the previous claims, **characterized in that** include sensing media (52, 54, 105, 121, 122) able to provide indicative signals of the temperature in the solar boiler (12) and/or at the inlet or outlet of the solar panel media (14) or thermal conditioning media (15).

6. Plant as in the claim 5, **characterized in that** it includes control media (106) which, according to the signals received from the sensing media (52, 54, 105, 121, 122) are able to command and control the operation of the solar panel media (14) together with the selective activation of the thermal energy generation media (16) and of the conditioning media (15).

7. Plant as in any of the previous claim, **characterized in that** the thermal conditioning media include radiant panels (15) at least for underfloor heating.

8. Plant as in any of the previous claim, **characterized in that** the thermal conditioning media include thermal convectors.

9. Plant as in any of the previous claim, **characterized in that** includes a group (34) for the automatic filling of the heat carrier fluid in the circuit of the solar panel media (14)

10. Procedure for the generation of domestic hot water and et least for environmental heating in a house or another building **characterized in that** includes:
a) A first phase in which warming up domestic hot water and an heating heat carrier fluid by means of a solar boiler (12) which is associated both to solar panels media (14) and to thermal conditioning media (15) which are able to employ the warmed heat carrier fluid from the solar boiler (12) to warm up a house or another building;
b) A second phase in which integrate the production of thermal energy of the solar boiler (12) by means of thermal energy generation media (16); in which, in the second phase, the thermal energy is simultaneously provided to the solar boiler (12) from above said solar panels media (14) and above said generation media (16), according to defined or definable ratios, in order to fully meet the thermal energy requirements of a house or another building.
